# EUROPÄISCHE PATENTSCHRIFT

(11) **EP 1 325 414 B1**
(45) Veröffentlichungstag und Bekanntmachung des Hinweises auf die Patenterteilung: **21.04.2004**
(21) Anmeldenummer: 01971468.2
(22) Anmeldetag: 08.10.2001
(51) Int. Cl.: G06F 11/00

(54) **BEHANDELN VON FEHLERN IN EINEM FEHLERTOLERANTEN VERTEILTEN COMPUTERSYSTEM**
HANDLING ERRORS IN AN ERROR-TOLERANT DISTRIBUTED COMPUTER SYSTEM
TRAITEMENT DE PANNES DANS UN SYSTEME INFORMATIQUE REPARTI A TOLERANCE DE PANNES

(30) Priorität: 10.10.2000 AT 17232000
(43) Veröffentlichungstag der Anmeldung: 09.07.2003
(73) Patentinhaber: FTS Computertechnik Ges.mbH, 2500 Baden-Siegenfeld (AT)
(72) Erfinder: KOPETZ, Hermann, A-2500 Baden-Siegenfeld (AT); BAUER, Günther, A-3252 Petzenkirchen (AT)
(74) Vertreter: Matschnig, Franz, Dipl.-Ing.
(86) Internationale Anmeldenummer: PCT/AT2001/000322
(87) Internationale Veröffentlichungsnummer: WO 2002/031656

(56) Entgegenhaltungen:
- EP-A- 0 622 712
- KOPETZ H. ET AL: "Tolerating Arbitrary Node Failures in the Time-Triggered Architecture" REAL-TIME SYSTEMS GROUP - PAPER SERVER, [Online] März 2001 (2001-03), Seiten 1-7, XP002196878 Gefunden im Internet: <URL:http://www.vmars.tuwien.ac.at/frame-p apers.html> [gefunden am 2002-04-22]
- KOPETZ H ET AL: "The transparent implementation of fault tolerance in the time-triggered architecture" DEPENDABLE COMPUTING FOR CRITICAL APPLICATIONS 7, 1999 SAN JOSE, CA, USA 6-8 JAN. 1999, PISCATAWAY, NJ, USA,IEEE, US, 6. Januar 1999 (1999-01-06), Seiten 191-205, XP010366438 ISBN: 0-7695-0284-9
- KOPETZ H ET AL: "TEMPORAL UNCERTAINTIES IN INTERACTIONS AMONG REAL-TIME OBJECTS" PROCEEDINGS OF THE SYMPOSIUM ON RELIABLE DISTRIBUTED SYSTEMS. HUNTSVILLE, OCT. 9 - 11, 1990, LOS ALAMITOS. IEEE COMP. SOC. PRESS, US, Bd. SYMP. 9, 9. Oktober 1990 (1990-10-09), Seiten 165-174, XP000278470 ISBN: 0-8186-2081-1

## Beschreibung

Die Erfindung bezieht sich auf ein Verfahren zum Behandeln von Fehlern in einem fehlertoleranten verteilten Computersystem mit einer Mehrzahl von Knotenrechnern, die über Kommunikationskanäle verbunden sind, und jeder Knotenrechner über eine autonome Kommunikationskontrolleinheit verfügt, wobei der Zugriff auf die Kommunikationskanäle nach einem zyklischen Zeitscheibenverfahren erfolgt und die Korrektheit von Knotenrechnern ausgehender Nachrichten durch Guardians überprüft wird.

Ebenso bezieht sich die Erfindung auf ein fehlertolerantes verteiltes Computersystem mit einer Mehrzahl von Knotenrechnern, die über zumindest eine Verteilereinheit und Kommunikationskanäle miteinander verbunden sind, jeder Knotenrechner über eine autonome Kommunikationskontrolleinheit verfügt, der Zugriff auf die Kommunikationskanäle nach einem zyklischen Zeitscheibenverfahren erfolgt und zur Überprüfung der von Knotenrechnem ausgehenden Nachrichten Guardians vorgesehen sind..

Sicherheitskritische technische Anwendungen, d.s. Anwendungen wo ein Fehler zu einer Katastrophe führen kann, werden zunehmend von verteilten fehlertoleranten Echtzeitcomputersystemen geführt

In einem verteilten fehlertoleranten Echtzeitcomputersystem, bestehend aus einer Anzahl von Knotenrechnern und einem Echtzeitkommunikationssystem, soll jeder Einzelausfall eines Knotenrechners toleriert werden. Im Kern einer solchen Computerarchitektur befindet sich ein fehlertolerantes Echtzeitkommunikationssystem zum vorhersehbar schnellen und sicheren Austausch von Nachrichten.

Ein Kommunikationsprotokoll, das diese Anforderungen erfüllt, ist in der US 5,694,542 entsprechenden EP 0 658 257 beschrieben. Das Protokoll ist unter dem Namen "Time-Triggered Protokoll/ C (TTP/C)" bekannt geworden und auch in Kopetz, H. (1997) *Real-Time Systems, Design Principles for Distributed Embedded Applications; ISBN: 0-7923-9894-7,* Boston, Kluwer Academic Publishers geofenbart. Es basiert auf dem bekannten zyklischen Zeitscheibenverfahren (TDMA - time-division multiple access) mit *a priori* festgelegten Zeitscheiben. TTP/C verwendet ein Verfahren zur fehlertoleranten Uhrensynchronisation, das in der US 4,866,606 geoffenbart ist.

TTP/C setzt voraus, dass das Kommunikationssystem eine logische Broadcasttopologie unterstützt und dass die Knotenrechner ein "fail-silence" Ausfallverhalten zeigen, d. h. entweder die Knotenrechner funktionieren korrekt im Wertebereich und im Zeitbereich oder sie sind ruhig. Die Verhinderung von Fehlern im Zeitbereich, d. s., der sogenannten "Babbling Idiot" Fehler, wird in TTP/C durch eine unabhängige Fehlererkennungseinheit, dort "BusGuardian" genannt, erreicht, der über eine unabhängige Zeitbasis verfügt und das Zeitverhalten des Knotenrechners kontinuierlich überprüft. Um die Fehlertoleranz zu realisieren, werden mehrere fail-silent Knotenrechner zu einer fehlertoleranten Einheit (fault-tolerant unit - FTU) zusammengefasst und das Kommunikationssystem repliziert. Solange ein Knotenrechner einer FTU und ein Replikat des Kommunikationssystems funktionieren, werden die Dienste der FTU im Zeit- und Wertebereich rechtzeitig erbracht.

Eine logische Broadcasttopologie der Kommunikation kann physikalisch entweder durch ein verteiltes Bussystem, ein verteiltes Ringsystem oder durch eine zentrale Verteilereinheit (z. B. einen Sternkoppler) mit Punkt-zu-Punkt Verbindungen zu den Knotenrechnern aufgebaut werden. Wenn ein verteiltes Bussystem oder ein verteiltes Ringsystem aufgebaut wird, so muss jeder Knotenrechner über seinen eigenen BusGuardian verfügen. Wird hingegen eine zentrale Verteilereinheit verwendet, so können alle Guardians in diese Verteilereinheit integriert werden, die aufgrund der globalen Beobachtung des Verhaltens aller Knoten ein reguläres Sendeverhalten im Zeitbereich effektiv erzwingen kann. Dies ist in der nachveröffentlichten WO 01/13230 A1 beschrieben.

In einem verteilten Computersystem sind Fehler, die zu einem inkonsistenten Systemzustand rühren können, besonders kritisch. Als Beispiel sei hier eine sogenannte "brake-bywire" Applikation in einem Auto angeführt, bei welcher ein zentraler Bremscomputer Bremsnachrichten an vier Radcomputer bei den Rädern sendet. Wenn eine Bremsnachricht von zwei Radcomputern richtig empfangen wird und die beiden anderen Radcomputer die Nachricht nicht empfangen, so entsteht ein inkonsistenter Zustand. Wenn nun eine Bremsung von zwei Rädern, die auf der gleichen Seite des Fahrzeugs liegen, erfolgt, kann das Fahrzeug außer Kontrolle geraten. Die hier beschriebene Fehlerart wird in der Literatur auch als Byzantinischer Fehler (Kopetz, p. 60, p. 133) bezeichnet Die schnelle Erkennung und richtige Behandlung von Byzantinischen Fehlern ist eines der schwierigen Probleme der Informatik.

Eine Unterklasse der Byzantinischen Fehler wird von den "Slightly-Off-Specification", kurz SOS-Fehlern gebildet Ein SOS-Fehler kann an der Schnittstelle zwischen Analogtechnik und Digitaltechnik auftreten. Auf dem vorliegenden Fachgebiet werden unter "Digitalsignalen" logische Signale verstanden, unter "Analogsignalen" jedoch alle physikalischen Signale. In diesem Sinne ist hier auch die Unterscheidung zwischen Analog- und Digitaltechnik zu verstehen. In der Realisierung einer Datenübertragung kann jedes logische Bit auf der Leitung durch einen Signalwert (z. B. Spannung aus einem spezifizierten Spannungstoleranzintervall) während eines spezifizierten Zeitintervalls dargestellt werden. Ein korrekter Sender muss seine Analogsignale innerhalb der spezifizierten Toleranzintervalle generieren, damit sichergestellt ist, dass alle korrekten Empfänger diese Signale auch korrekt interpretieren. Wenn nun ein Sender einer Nachricht ein Signal knapp (Slightly-Off-Specification) außerhalb des spezifizierten Intervalls (im Wertebereich, im Zeitbereich, oder in beiden) generiert, so kann der Fall eintreten, dass einige Empfänger dieses Signal richtig interpretieren, während andere Empfänger das Signal nicht richtig interpretieren können. Wir bezeichnen eine solche Broadcastnachricht als *SOS-falsch*. In der Folge kann ein Byzantinischer Fehler, wie oben anhand eines Bremssystems beschrieben, auftreten. Ein solcher Fehler kann seine Ursache in einer fehlerhaften Spannungsversorgung, einem fehlerhaften Taktgeber oder einem durch Alterung geschwächten Bauteil haben. Die Übertragung einer Nachricht auf zwei Kommunikationskanälen kann SOS-Fehler nicht verhindern, wenn die Fehlerursache, z. B. ein fehlerhafter Taktgeber des Rechnerknotens, der die Bitfolge generiert, beide Kanäle betrifft.

Es ist ein Grundsatz der Sicherheitstechnik, auftretende Fehler zum frühestmöglichen Zeitpunkt zu erkennen, um Gegenmaßnahmen ergreifen zu können, ehe Folgefehler weiteren Schaden anrichten. Diesem Grundsatz wird im zitierten TTP/C Protokoll (EP 0 658 257) dadurch entsprochen, dass SOS-Fehler über den sogenannten Membershipalgorithmus des TTP/C Protokolls innerhalb von maximal zwei TDMA-Runden konsistent erkannt werden. Da es sich bei SOS-Fehlern typischerweise um sehr selten auftretende transiente Fehler handelt, werden in einer bestehenden Prototypimplementierung von TTP/C SOS-Fehler der auch sehr selten auftretenden Klasse der nahe-koinzidenten Mehrfachfehler zugewiesen und wie diese behandelt.

Eine Aufgabe der Erfindung liegt darin, ein Tolerieren von Fehlern der SOS-Klasse in einem verteilten Computersystem durch geeignete Maßnahmen zu ermöglichen.

Diese Aufgabe wird mit einem Verfahren der eingangs genannten Art gelöst, bei welchen erfindungsgemäß die unabhängig ausgebildeten Guardians eine mit einem SOS ("slightly off specifications")-Fehler behaftete Nachricht entweder in eine korrekte Nachricht umformen oder in eine Nachricht die von allen empfangenden Knotenrechnern als eindeutig inkorrekt erkennbar ist.

Dokument D1 = KOPETZ H ET AL: 'The transparent implementation of fault tolerance in the time-triggered architecture' DEPENDABLE COMPUTING FOR CRITICAL APPLICATIONS 7, 1999 SAN JOSE, CA, USA 6-8 JAN. 1999, PISCATAWAY, NJ, USA,IEEE, US, 6. Januar 1999 (1999-01-06), Seiten 191-205, XP010366438 ISBN: 0-7695-0284-9, wird als nächstliegender Stand der Technik angesehen, da es alle Merkmale des Oberbegriffs des Hauptanspruchs 1 aufweist. Diesbezüglich wird insbesondere auf D1, Seite 197, Absatz 3.2 sowie Seite 19, Absatz 4.1, verwiesen.

Die Aufgabe wird auch mit einem fehlertoleranten verteilten Computersystem der oben angegebenen Art gelöst, bei welchem erfindungsgemäß die unabhängig ausgebildeten Guardians dazu eingerichtet sind, eine mit einem SOS ("Slightly off specifications")-Fehler behaftete Nachricht entweder in eine korrekte Nachricht umzuformen oder in eine Nachricht, die von allen empfangenden Knotenrechnern als eindeutig inkorrekt erkennbar ist.

Dank der Erfindung kann in einer zeitgesteuerten, verteilten, fehlertoleranten Architektur für hochzuverlässige Echtzeit-Computeranwendungen auch die Fehlerklasse der "slightly off specification" (SOS)-Fehler toleriert werden.

Bei einer vorteilhaften Variante ist vorgesehen, dass jeder unabhängige Guardian unter Stützung auf seine unabhängige Zeitbasis überprüft, ob der Beginn einer von der Kommunikationskontrolleinheit eines Knotenrechners gesendeten Nachricht innerhalb des dem Guardian a priori bekannten Beginnzeitfensters der Nachricht fällt, und der den entsprechenden Kommunikationskanal sofort schließt, falls die Nachricht außerhalb dieses Zeitfensters liegt, damit eine unvollständige, von allen empfangenden Knotenrechnern als inkorrekt erkennbare Nachricht entsteht Auf diese Weise lässt sich das Auftreten von nur leicht verstümmelten, möglicherweise von den Empfängern fälschlicherweise als korrekt interpretierten Nachrichten verhindern.

Zweckmäßig ist es weiters, wenn ein Guardian das eingehende physikalische Signal jeder Nachricht im Zeit- und Wertebereich unter Berücksichtigung der relevanten Codierungsvorschriften und unter Verwendung seiner lokalen Zeitbasis und seiner lokalen Stromversorgung regeneriert. Ein solches unabhängiges Regenerieren erhöht die geforderte Sicherheit des Systems wesentlich.

Eine andere vorteilhafte Weiterbildung der Erfindung sieht vor, dass ein keine Nachrichten empfangender Guardian keine Nachrichten mit korrekter CRC und korrekter Länge generiert. Auch diese Maßnahme kann die Sicherheit des Systems weiter steigern.

Eine optimale Steuerung auf Basis des Beginnzeitfensters sieht vor, dass das Beghuizeitfenster eines Guardians um mehr als die Präzision des Systems nach dem Beginnzeitfenster eines Knotenrechners beginnt und das Beginnzeitenfenster eines Guardians um mehr als die Präzision vor dem Beginnzeitfenster eines Knotenrechners endet

Zusätzliche Vorteile nicht nur hinsichtlich der Sicherheit sondern auch in Bezug auf die Realisierungskosten des Systems ergeben sich, falls die Guardians in die zumindest eine Verteilereinheit integriert sind, und die Verteilereinheit über eine unabhängige Stromversorgung und über eine unabhängige, fehlertolerante verteilte Uhrensynchronisation verfügt.

Die Erfindung samt weiterer Vorteile ist im folgenden anhand von Ausführungsbeispielen näher erläutert, die in der Zeichnung veranschaulicht sind. In dieser zeigen
- Fig.1: schematisch ein verteiltes Computersystem, bestehend aus vier Knotenrechnem, die über zwei replizierte zentrale Verteilereinheiten miteinander verbunden sind,
- Fig. 2: eine Fault Containment Unit, gebildet aus einem Knotenrechner und zwei Guardians und
- Fig. 3: die Lage der Beginnzeitfenster eines Guardians und eines Knotenrechners.

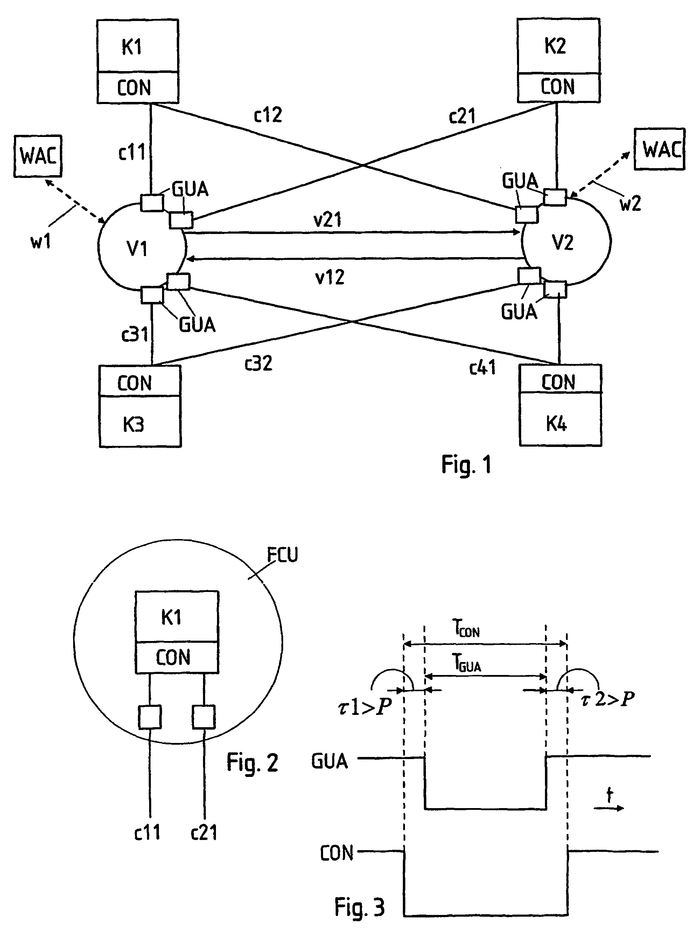

Fig. 1 zeigt ein System von vier Knotenrechnern K1, K2, K3, K4, wobei jeder Knotenrechner eine austauschbare Einheit bildet und mit je einer Punkt-zu-Punkt Verbindung oder Kommunikationskanal c11 ... c42 mit einer von zwei replizierten zentralen Verteilereinheiten V1 oder V2 verbunden ist. Zwischen jedem Ausgang eines Knotenrechners und jedem Eingang der Verteilereinheit befindet sich ein Guardian GUA, der entweder selbständig ausgeführt ist oder in die Verteilereinheit integriert werden kann. Die prinzipielle Funktion eines Guardian oder BusGuardian ist in Kopetz, p. 173 erläutert Um seine Funktion erfüllen zu können, benötigt ein Guardian neben einem Controller auch Schalter um Kanäle zu öffnen bzw. zu sperren. Zwei unidirektionale Kommunikationskanäle v21, v12 zwischen den Verteilereinheiten V1 und V2 dienen der wechselseitigen Überwachung und dem Informationsaustausch der zentralen Verteilereinheiten V1 und V2. Wie gleichfalls aus Kopetz, z. B. p. 172 - 177, hervorgeht, besitzt jeder Knotenrechner K1 ... K4 einen autonomen Controller CON oder Kommunikationscontroller, der mit den replizierten Kommunikationskanälen, z. B. c11, c12 verbunden ist. Angedeutete Verbindungen w1, w2 sind dedizierte Kommunikationskanäle. Sie führen zu Wartungscomputern w1, w2, welche die Parameter der Verteilereinheiten und deren korrekte Funktionen überwachen können.

Fig. 2 zeigt einen Knotenrechner K1 mit seinem Kommunikationscontroller CON und den Kommunikationskanälen c11, c21 zu den anderen Knotenrechnern bzw. Verteilereinheiten des verteilten Computersystems. Hier sind die Guardians GUA als BusGuardians für die Kommunikationskanäle c11, c21 vorgesehen, doch können sie gemäß Fig. 1 in die beiden unabhängigen zentralen Verteilereinheiten V1, V2 integriert sein. Logisch gesehen bilden die drei Subsysteme Knotenrechner + zwei Guardians eine Einheit, die hier "Fault Containment Unit" FCU bezeichnet wird und so in Fig. 2 angeschrieben ist; dies wie gesagt unabhängig davon, ob die Guardians GUA physikalisch in die zentralen Verteilereinheiten oder in die Knotenrechner integriert sind.

Nun sei auf Fig. 3 Bezug genommen, in welcher Beginnzeitfenster für den Anfang einer Nachricht eingetragen sind. Man unterscheidet zwischen dem Beginnfenster T_{CON} mit eben dieser Länge T_{CON} eines Knotenrechners bzw. seines Controllers und dem Beginnzeitfenster T_{GUA} eines Guardians. Die Erfindung sieht vor, dass das Zeitfenster T_{GUA} eines Guardians kürzer als das Zeitfenster T_{CON} eines Knotenrechners ist und zwischen dem in das Fenster T_{CON} eingebetteten Zeitfenster T_{GUA} ein Abstand τ1 bzw. τ2 verbleibt, der größer als die Präzision P des Systems ist. Der Begriff der Präzision ist z. B. in Kopetz, Kapitel 3.1.3 "Precision and Accurancy", p. 49 und 50 erläutert.

Wir bezeichnen nun einen beliebigen Fehler eines aktiven Subsystems, z. B. des Knotenrechners K1, als *beliebig aktiv* (unconstrained active). Wir bezeichnen weiters einen Fehler eines passiven Subsystems, z. B. eines Guardians oder einer Verbindung c11 oder c22 als *beliebig* passiv (unconstrained passiv), wenn durch die Konstruktion des passiven Subsystems sichergestellt ist, dass dieses Subsystem aus sich heraus, d. h. ohne eine Eingabe von einem aktiven Subsystem, keine Bitfolge generieren kann, die von einem Empfänger als syntaktisch richtige Nachricht interpretiert werden kann. Eine Nachricht ist *syntaktisch richtig*, wenn eine CRC Überprüfung keinen Fehler anzeigt, sie die erwartete richtige Länge hat, den Codierungsvorschriften entspricht und innerhalb des erwarteten Zeitintervalls eintrifft.

Wenn ein passives Subsystem nicht über das Wissen verfügt, wie ein korrektes CRC zu generieren ist (hat keinen Zugriff auf den CRC Generierungsalgorithmus) und wie lange eine korrekte Nachricht sein muss, so ist die Wahrscheinlichkeit, dass aufgrund von statistischen Zufallsprozessen (Störungen) eine syntaktisch richtige Nachricht entsteht, vernachlässigbar klein.

Eine Fault Containment Unit FCU kann einen beliebigen aktiven Fehler eines Knotenrechners K1 oder einen beliebigen passiven Fehler eines der beiden Guardians GUA in einen Fehler, der kein byzantinischer Fehler ist, umwandeln, wenn folgende Annahmen erfüllt werden:
(i) ein korrekter Knotenrechner K1 sendet auf beiden Kanälen c11 und c12 die gleiche syntaktisch richtige Nachricht und
(ü) ein korrekter Guardian GUA formt eine SOS-falsche Nachricht von dem Knotenrechner K1 entweder in eine syntaktisch richtige Nachricht oder in eine Nachricht um, die von allen Empfängern als eindeutig inkorrekt erkannt werden kann (nicht SOS Nachricht) und
(iii) während des Sendens einer Nachricht ist maximal eines der angeführten Subsysteme fehlerhaft.

Aufgrund der Fehlerannahme (iii) kann nur ein einziges der drei angeführten Subsysteme K1, GUA, GUA fehlerhaft sein. Ist der Knotenrechner K1 beliebig fehlerhaft, so sind die beiden Guardians GUA und GUA nicht fehlerhaft und generieren entsprechend Annahme (ii) nicht-SOS Nachrichten. Ist einer der beiden Guardians GUA beliebig passiv fehlerhaft, so generiert der Knotenrechner K1 eine syntaktisch richtige Nachricht und überträgt diese syntaktisch richtige Nachricht an beide Guardians GUA (Annahme i). Der korrekte Guardian GUA überträgt nun die Nachricht korrekt an alle Empfänger, d. h. Knotenrechner. Aufgrund der Empfangslogik und dem Selbstvertrauensprinzip des TTP/C-Protokolls werden in diesem Fall alle richtigen Empfänger die richtige Nachricht auswählen und den sendenden Knotenrechner als richtig klassifizieren. Um SOS-Fehler zu tolerieren, ist keine Änderung im TTP/C-Protokoll erforderlich.

Eine beliebige Nachricht kann aus folgenden drei Gründen SOS-falsch sein:
(i) die Nachricht hat einen SOS-Fehler im Wertebereich und/oder
(ü) die Nachricht hat einen inneren SOS Fehler im Zeitbereich (z. B., Timing Fehler innerhalb des Codes) und/oder
(iii) die Übertragung der Nachricht wird knapp außerhalb des spezifizierten Sendeintervalls (siehe Fig. 3) begonnen.

Ein korrekter Guardian (GUA) verwandelt diese Fehlerursachen wie folgt in nicht SOS-Fehler:
(i) Die Ausgabewerte der Nachricht werden durch eine Guardian GUA mit der unabhängigen Spannungsversorgung des Guardians regeneriert.
(ü) Die Codierung der Nachricht wird durch einen Guardian GUA mit der unabhängigen Zeitbasis des BusGuardian regeneriert
(iii) Der Guardian sperrt den Kanal, sobald er erkennt, dass die Übertragung außerhalb des spezifizierten Zeitintervalls T_{GUA} begonnen hat Damit erhalten alle Empfänger, d. h. Knotenrechner stark verstümmelte Nachrichten, die als fehlerhaft erkannt werden.

Ein Sperren des Kanals durch einen Guardian GUA unmittelbar nach dem spezifizierten Ende der Übertragungszeit einer Nachricht ist im allgemeinen nicht ausreichend, um SOS-Fehler zu verhindern, da nicht auszuschließen ist, dass eine durch das Sperren schwach verstümmelte Nachricht Anlass für einen SOS-Fehler eines an sich fehlerfreien Guardians GUA sein kann. Wenn nun beide Guardians die Nachricht in der gleichen Weise schwach verstümmeln, so kann ein SOS-Fehler auf Systemebene entstehen.

Abschließend sei festgehalten, dass sich diese Erfindung nicht auf die beschriebene Realisierung mit vier Knotenrechnern beschränkt, sondern beliebig erweiterbar ist. Sie ist nicht nur beim TTP/C Protokoll, sondern auch bei anderen zeitgesteuerten Protokollen anwendbar.

## Patentansprüche

1. Verfahren zum Behandeln von Fehlern in einem fehlertoleranten verteilten Computersystem mit einer Mehrzahl von Knotenrechnern (K1 ... K4), die über Kommunikationskanäle (c11 ... c42) verbunden sind, und jeder Knotenrechner über eine autonome Kommunikationskontrolleinheit (CON) verfügt, wobei der Zugriff auf die Kommunikationskanäle nach einem zyklischen Zeitscheibenverfahren erfolgt und die Korrektheit von Knotenrechnern ausgehender Nachrichten durch Guardians (GUA) überprüft wird und
**dadurch gekennzeichnet, dass**
die unabhängig ausgebildeten Guardians (GUA) eine mit einem SOS ("slightly off specifications")-Fehler behaftete Nachricht entweder in eine korrekte Nachricht umformen oder in eine Nachricht die von allen empfangenden Knotenrechnern (K1 ... K4) als eindeutig inkorrekt erkennbar ist.

2. Verfahren nach Anspruch 1, **dadurch gekennzeichnet, dass** jeder unabhängige Guardian (GUA) unter Stützung auf seine unabhängige Zeitbasis überprüft, ob der Beginn einer von der Kommuztikationskontrolleinheit (CON) eines Knotenrechners (K1 ... K4) gesendeten Nachricht innerhalb des dem Guardian (GUA) a priori bekannten Beginnzeitfensters (T_{GUA}) der Nachricht fällt, und der den entsprechenden Kommunikationskanal (c11 ... c42) sofort schließt, falls die Nachricht außerhalb dieses Zeitfensters liegt, damit eine unvollständige, von allen empfangenden Knotenrechnern als inkorrekt erkennbare Nachricht entsteht.

3. Verfahren nach Anspruch 1 oder 2, **dadurch gekennzeichnet, dass** ein Guardian (GUA) das eingehende physikalische Signal jeder Nachricht im Zeit- und Wertebereich unter Berücksichtigung der relevanten Codierungsvorschriften und unter Verwendung seiner lokalen Zeitbasis und seiner lokalen Stromversorgung regeneriert.

4. Verfahren nach einem der Ansprüche 1 bis 3, **dadurch gekennzeichnet, dass** ein keine Nachrichten empfangender Guardian (GUA) keine Nachrichten mit korrekter CRC und korrekter Länge generiert.

5. Verfahren nach einem der Ansprüche 2 bis 4, **dadurch gekennzeichnet, dass** das Beginnzeitfenster (T_{GUA}) eines Guardians (GUA) um mehr als die Präzision (P) des Systems nach dem Beginnzeitfenster (T_{CON}) eines Knotenrechners (K1 ... K4) beginnt und das Beginnzeitenfenster eines Guardians um mehr als die Präzision vor dem Beginnzeitfenster eines Knotenrechners endet

6. Fehlertolerantes verteiltes Computersystem mit einer Mehrzahl von Knotenrechnern (K1 ... K4), die über zumindest eine Verteilereinheit (V1, V2) und Kommunikationskanäle (c11 ... c42) miteinander verbunden sind, jeder Knotenrechner über eine autonome Kommunikationskontrolleinheit (CON) verfügt, der Zugriff auf die Kommunikationskanäle nach einem zyklischen Zeitscheibenverfahren erfolgt und zur Überprüfung der von Knotenrechnern ausgehenden Nachrichten Guardians (GUA) vorgesehen sind,
**dadurch gekennzeichnet, dass**
die unabhängig ausgebildeten Guardians (GUA) dazu eingerichtet sind, eine mit einem SOS ("Slightly off specifications")-Fehler behaftete Nachricht entweder in eine korrekte Nachricht umzuformen oder in eine Nachricht, die von allen empfangenden Knotenrechnern (K1 ... K4) als eindeutig inkorrekt erkennbar ist.

7. Computersystem nach Anspruch 6, **dadurch gekennzeichnet, dass** ein Guardian (GUA) eine unabhängige Zeitbasis besitzt und dazu eingerichtet ist, zu überprüfen, ob der Beginn einer von der Kommunikationskontrolleinheit (CON) eines Knotenrechners (K1 ... K4) gesendeten Nachricht innerhalb des dem Guardian (GUA) a priori bekannten Beginnzeitfensters (T_{GUA}) der Nachricht fällt, sowie dazu, den entsprechenden Kommunikationskanal (c11 ... c42) sofort zu schließen, falls die Nachricht außerhalb dieses Zeitfensters liegt, damit eine unvollständige, von allen empfangenden Knotenrechnern als inkorrekt erkennbare Nachricht entsteht.

8. Computersystem nach Anspruch 5 oder 6, **dadurch gekennzeichnet, dass** ein Guardian (GUA) dazu eingerichtet ist, das eingehende physikalische Signal jeder Nachricht im Zeit- und Wertebereich unter Berücksichtigung der relevanten Codierungsvorschriften und unter Verwendung seiner lokalen Zeitbasis und seiner lokalen Stromversorgung zu regenerieren.

9. Computersystem nach einem der Ansprüche 6 bis 8, **dadurch gekennzeichnet, dass** ein Guardian (GUA) dazu eingerichtet ist, falls er keine Nachricht empfängt, auch keine Nachrichten mit korrekter CRC und korrekter Länge zu generieren.

10. Computersystem nach einem der Ansprüche 6 bis 9, **dadurch gekennzeichnet, dass** der Anfang des Beginnzeitfensters (T_{CON}) eines Knotenrechners (K1 ... K4) um mehr als die Präzision (P) des Systems vor dem Anfang des Beginnzeitfensters (T_{GUA}) eines Guardians (GUA) liegt und das Ende des Beginnzeitfensters eines Guardians um mehr als die Präzision vor dem Ende des Beginnzeitfensters eines Knotenrechners liegt.

11. Computersystem nach einem der Ansprüche 6 bis 10, **dadurch gekennzeichnet, dass** die Guardians (GUA) in die zumindest eine Verteilereinheit (V1, V2) integriert sind, und die Verteilereinheit über eine unabhängige Stromversorgung und über eine unabhängige, fehlertolerante verteilte Uhrensynchronisation verfügt.

## Claims

1. A method of treating errors in an fault-tolerant distributed computer system comprising a plurality of node computers (K1... K4) interconnected by communication channels (c11... c42), each node computer having access to an autonomous communication control unit (CON), in which access to the communication channels is allowed by a cyclic time slicing process and the correctness of messages coming from the node computers is checked by guardians (GUA),
**characterized in that**
the independently designed guardians (GUA) convert a message exhibiting an SOS (slightly off specifications) error either to a correct message or to a message that will be recognized by all of the receiving node computers (K1... K4) as being unequivocally incorrect.

2. A method as defined in claim 1, **characterized in that** each independent guardian (GUA) checks, on the basis of its independent time base, whether the commencement of a message sent by the communication control unit (CON) of a node computer (K1... K4) occurs in the begin time window (T_{GUA}) of the message known *a priori* to the guardian (GUA) and immediately closes the corresponding communication channel (c11 ... c42) if the message is outside this time window, in order that an incomplete message is produced which will be recognizable to all receiving node computers as being incorrect.

3. A method as defined in claim 1 or claim 2, **characterized in that** a guardian (GUA) regenerates the in-coming physical signal of each message in the temporal and value domain while taking into consideration the relevant coding regulations and utilizing its local time base and its local power supply.

4. A method as defined in any one of claims 1 to 3, **characterized in that** a guardian (GUA) receiving no messages will not generate any messages of correct CRC and correct length.

5. A method as defined in any one of claims 2 to 4, **characterized in that** the begin time window (T_{GUA}) of a guardian (GUA) begins after the begin time window (T_{CON}) of a node computer (K1 ... K4) by more than the precision (P) of the system and the begin time window of a guardian ends before the begin time window of a node computer by more than said precision.

6. A fault-tolerant distributed computer system having a plurality of node computers (K1 ... K4) interconnected by at least one distribution unit (V1, V2) and communication channels (c11 ... c42), each node computer having access to an autonomous communication control unit (CON) allowing access to the communication channels by a cyclic time slicing process, guardians (GUA) being provided for checking the messages coming from the node computers,
**characterized in that**
the independently designed guardians (GUA) are adapted to convert a message exhibiting an SOS (slightly off specifications) error either to a correct message or to a message that will be recognized by all of the receiving node computers (K1 ... K4) as being unequivocally incorrect.

7. A computer system as defined in claim 6, **characterized in that** a guardian (GUA) possesses an independent time base and is adapted to check whether the commencement of a message sent by the communication control unit (CON) of a node computer (K1... K4) occurs in the begin time window (T_{GUA}) known *a priori* to the guardian (GUA) and to close the corresponding communication channel (c11 ... c42) immediately if the message is outside this time window so as to produce an incomplete message that will be recognized by all of the receiving node computers as being incorrect.

8. A computer system as defined in claim 5 or claim 6, **characterized in that** a guardian (GUA) is adapted to regenerate the in-coming physical signal of each message in the temporal and value domain while taking into consideration the relevant coding regulations and utilizing its local time base and its local power supply.

9. A computer system as defined in any one of claims 6 to 8, **characterized in that** a guardian (GUA) is adapted, when receiving no messages, not to generate any messages of correct CRC and correct length.

10. A computer system as defined in any one of claims 6 to 9, **characterized in that** the begin time window (T_{CON}) of a node computer (K1... K4) begins before the commencement of the begin time window (T_{GUA}) of a guardian (GUA) by more than the precision (P) of the system and the end of the begin time window of a guardian ends before the end of the begin time window of a node computer by more than said precision.

11. A computer system as defined in any one of claims 6 to 10, **characterized in that** the guardians (GUA) are integrated in the at least one distribution unit (V1, V2), and the distribution unit has an independent power supply and independent, fault-tolerant distributed clock synchronization.

## Revendications

1. Procédé de traitement d'erreurs dans un système informatique distribué tolérant aux erreurs comprenant une multitude d'ordinateurs de jonction (K1 ... K4) reliés par des canaux de communication (c11 ... c42) et chaque ordinateur de jonction disposant d'une unité de contrôle de communication (CON) autonome, l'accès aux canaux de communication se faisant selon un procédé cyclique de décapage du temps et l'exactitude de messages partant de calculateurs de jonction étant vérifiée par des gardiens (GUA) et
**caractérisé en ce que** les gardiens (GUA) indépendants transforment un message présentant un défaut SOS (« slightly off specifications » légèrement non conforme) soit en un message correct soit en un message pouvant être identifié sans équivoque par tous les calculateurs de jonction récepteurs (K1 ... K4) comme étant incorrect.

2. Procédé selon la revendications 1, **caractérisé en ce que** chaque gardien (GUA) indépendant vérifie, en s'appuyant sur sa base de temps indépendante, si le début d'un message envoyé par l'unité de contrôle de communication (CON) d'un calculateur de jonction (K1 ... K4) tombe dans la fenêtre de temps de début (T_{GUA}) du message à priori connue à priori par le gardien (GUA), et qui ferme immédiatement le canal de communication (c11 ... C42) correspondant si le message se trouve à l'extérieur de cette fenêtre de temps, pour ainsi obtenir un message incomplet pouvant être identifié par tous les calculateurs de jonction récepteurs comme étant incorrect.

3. Procédé selon la revendication 1 ou 2, **caractérisé en ce qu'**un gardien (GUA) régénère le signal physique arrivant de chaque message dans la plage de temps et de valeur en tenant compte des prescriptions de codage en vigueur et en utilisant sa base de temps locale et son alimentation électrique locale.

4. Procédé selon l'une quelconque des revendications 1 à 3, **caractérisé en ce qu'**un gardien (GUA) ne recevant pas de messages ne génère pas de messages d'un CRC correct et d'une longueur correcte.

5. Procédé selon l'une quelconque des revendications 2 à 4, **caractérisé en ce que** la fenêtre de temps de début (T_{GUA}) d'un gardien (GUA) commence à plus que la précision (P) du système après la fenêtre de temps de début (T_{CON}) d'un calculateur de jonction (K1 ... K4) et que la fenêtre de temps de début d'un gardien se termine à plus que la précision avant la fenêtre de temps de début d'un calculateur de jonction.

6. Système informatique distribué tolérant aux erreurs comprenant une multitude de calculateurs de jonction (K1 ... K4) reliés les uns aux autres par au moins une unité de répartition (V1, V2) et des canaux de communication (c11 ... c42), chaque calculateur disposant d'une unité de contrôle de communication (CON) autonome, l'accès aux canaux de communication se faisant selon un procédé cyclique de découpage du temps, et pour la vérification des messages partant des calculateurs de jonction des gardiens (GUA) étant prévus,
**caractérisé en ce que** les gardiens (GUA) indépendants sont prévus pour transformer un message présentant un défaut SOS (« slightly off specifications » légèrement non conforme) soit en un message correct soit en un message pouvant être identifié sans équivoque par tous les calculateurs de jonction récepteurs (K1 ... K4) comme étant incorrect.

7. Système informatique selon la revendication 6, **caractérisé en ce qu'**un gardien (GUA) possède une base de temps indépendante et est prévu pour vérifier si le début d'un message envoyé par l'unité de contrôle de communication (CON) d'un calculateur de jonction (K1 ... K4) tombe dans la fenêtre de temps de début (T_{GUA}) du message connue à priori par le gardien (GUA), et pour fermer immédiatement le canal de communication (c11 ... C42) correspondant si le message se trouve à l'extérieur de cette fenêtre de temps, pour ainsi obtenir un message incomplet pouvant être identifié par tous les calculateurs de jonction récepteurs comme étant incorrect.

8. Système informatique selon la revendication 5 ou 6, **caractérisé en ce qu'**un gardien (GUA) est prévu pour régénérer le signal physique arrivant de chaque message dans la plage de temps et de valeur en tenant compte des prescriptions de codage en vigueur et en utilisant sa base de temps locale et son alimentation électrique locale.

9. Système informatique selon l'une quelconque des revendications 6 à 8, **caractérisé en ce qu'**un gardien (GUA) est prévu qui, s'il ne reçoit pas de message, ne génère pas de messages non plus d'un CRC correct et d'une longueur correcte.

10. Système informatique selon l'une quelconque des revendications 6 à 9, **caractérisé en ce que** le début de la fenêtre de temps de début (T_{CON}) d'un calculateur de jonction (K1 ... K4) se trouve à plus que la précision (P) du système avant le début la fenêtre de temps de début (T_{GUA}) d'un gardien GUA) et que la fin de la fenêtre de temps de début d'un gardien se trouve à plus que la précision avant la fin de la fenêtre de temps de début d'un calculateur de jonction.

11. Système informatique selon l'une quelconque des revendications 6 à 10, **caractérisé en ce que** les gardiens (GUA) sont intégrés dans l'au moins une unité de répartition (V1, V2) et que l'unité de répartition dispose d'une alimentation électrique indépendante et d'une synchronisation d'horloge distribuée indépendante tolérante aux erreurs.
